Europäisches Patentamt

European Patent Office

Office européen des brevets

(11) Veröffentlichungsnummer: **0 098 474**
**A2**

(12) # EUROPÄISCHE PATENTANMELDUNG

(21) Anmeldenummer: 83106160.1

(22) Anmeldetag: 23.06.83

(51) Int. Cl.³: **A 01 G 9/00**

(30) Priorität: 06.07.82 DE 3225263

(43) Veröffentlichungstag der Anmeldung: **18.01.84**
**Patentblatt 84/3**

(84) Benannte Vertragsstaaten: **AT BE CH DE FR GB IT LI LU NL SE**

(71) Anmelder: **Herold, Werner, Hordeler Strasse 85a, D-4690 Herne 2 (DE)**

(72) Erfinder: **Herold, Werner, Hordeler Strasse 85a, D-4690 Herne 2 (DE)**

(74) Vertreter: **Herrmann-Trentepohl, Werner, Dipl.-Ing. et al, Postfach 1140 Schaeferstrasse 18, D-4690 Herne 1 (DE)**

(54) **Einrichtung zur Haltung von Pflanzen in überdachten Räumen.**

(57) Bei einer Einrichtung zur Haltung von Pflanzen in Großraumbüros, Restaurants, Banken o.dgl. mit einer ein geschlossenes System bildenden Pflanzensäule, bestehend aus einem hohlen Standgefäß mit stockwerkartig übereinander angeordneten, seitlich angesetzten Pflanzengefäßen und einem unter Wassereinfüllbecken sowie mit einer Vorrichtung zur Zuführung von Wasser zu den Pflanzengefäßen werden unter Verwendung von Pflanzensubstraten und Hydrodüngern zwischen den stockwerkartig angeordneten Pflanzengefäßen Zwischendecks angeordnet und als Vorrichtung zum Zuführen von Wasser jedem Zwischendeck eine mit diesem durch Verbindungsröhrchen verbundene Wassereinfüllschale zugeordnet, um so Übersäuerung, stauende Nässe und langsames Faulen an den Wurzelballen infolge von Luft-und Sauerstoffmangel zu vermeiden.

Um eine besonders vorteilhafte Verbindung zwischen Standgefäß, Zwischendecks, Rippen, Einfüllschalen und Pflanzengefäß zu garantieren, können die einzelnen Pflanzengefäße zu einem Ringgefäß vereinigt sein.

**-1-**

**0098474**

4690 Herne 1
Schaelerstr 18
Postfach 11 40
**Pat.-Anw. Herrmann-Trentepohl**
Fernsprecher  0 23 23 / 5 10 13
5 10 14

Telegrammanschrift
Bahrpatente Herne
Telex  08 229 853

**Dipl. - Ing. R. H. Bahr** (1931-1981)
**Dipl. - Phys. Eduard Betzler**
**Dipl. - Ing. W. Herrmann-Trentepohl**
PATENTANWÄLTE
PROFESSIONAL REPRESENTATIVES
BEFORE THE EUROPEAN PATENT OFFICE

— 8000 München 70
Plinganserstr  18 a
Postfach 70 02 09
**Pat.-Anw. Betzler**
Fernsprecher  089 / 7 25 40 63
7 25 40 64
7 25 40 65

Telegrammanschrift
Babetzpat München
Telex  5 215 360
Telefax 089 / 79 89 88

Bankkonten.
Bayerische Vereinsbank München 952 287
BLZ 700 202 70
Dresdner Bank AG Herne 7-520 499
BLZ 432 800 84
Postscheckkonto Dortmund 558 68-467
BLZ 440 100 46

Ref.:      A 31314 B/i
In der Antwort bitte angeben

Zuschrift bitte nach:

Abholfach 3

21. Juni 1983

Werner Herold

Hordeler Straße 85a

4690 Herne 2      BEZEICHNUNG GEÄNDERT
siehe Titelseite

---

Einrichtung zur Haltung von Pflanzen in Großraumbüros, Restaurants, Banken o. dergl.

---

Die Erfindung betrifft eine Einrichtung zur Haltung von
Pflanzen in Großraumbüros, Restaurants, Banken o.dergl.
mit einer ein geschlossenes System bildenden Pflanzsäule,
bestehend aus einem hohlen Standgefäß mit stockwerkartig
übereinander angeordneten, seitlich angesetzten Pflanzgefäßen und einem unteren Wassereinfüllbecken sowie mit
einer Vorrichtung zur Zuführung von Wasser zu den Pflanzgefäßen.

Eine solche Einrichtung ist aus der DE-GM-Schrift 760 7193
bekannt. Bei dieser Einrichtung besteht die Pflanzsäule
aus einem senkrecht aufgestellten Rohr mit mehreren an

- 2 -

seinem Umfang und in der Höhe verteilt angeordneten Durchbrechungen, die die Pflanzen aufnehmen. Der Rohrrinnenraum ist mit Erde gefüllt, so daß die Wurzelstöcke der Pflanzen in dieser Erde wurzeln. Diese Erde übersäuert nach einiger Zeit und es kommt durch das ständige Gießen auch zu stauender Nässe und zu einem langsamen Faulen infolge von Luft- bzw. Sauerstoffmangel an den Wurzelstöcken.

Aufgabe der Erfindung ist es, die bekannte Einrichtung dahingehend zu verbessern, daß eine Übersäuerung, stauende Nässe und langsames Faulen an den Wurzelstöcken infolge von Luft- bzw. Sauerstoffmangel vermieden werden.

Gelöst wird diese Aufgabe dadurch, daß unter Verwendung von Pflanzsubstraten und Hydrodüngern zwischen den stockwerkartig übereinander angeordneten Pflanzgefäßen Zwischendecks angeordnet sind und daß als Vorrichtung zum Zuführen von Wasser jedem Zwischendeck eine mit diesem durch Verbindungsröhrchen verbundene Wassereinfüllschale zugeordnet ist.

Ein Pflanzsubstrat, das optimale Bedingungen gewährleistet, ist z.B. unter dem Namen Grolit 2000 im Handel. Es handelt sich um ein strukturstabiles, rotbraunes Tongranulat mit erstaunlich sicherer Wasserführung, das zugleich ausreichend Luft an die Pflanzenwurzeln heranläßt. Damit läßt sich eine pflegeleichte Langzeitbewässerung mit Erfolg durchführen. Das Tongranulat besteht aus kubisch gebrochenen Steinen, in denen die Pflanze ihre Wurzeln leicht verankern kann, wodurch ein sicherer Stand gewährleistet ist. Eine Verdichtung des Substrates ist auch nach jahrelangem Gebrauch ausgeschlossen.

Das Pflanzsubstrat ist extrem wasseraufnahmefähig, es kann bis zur Hälfte seines Eigengewichtes Feuchtigkeit speichern. Aufgrund dieser Eigenschaften können alle erdangezogenen

-3-

- 3 -

Blüten- und Grünpflanzen auf eine bequeme, zeitsparende Langzeitbewässerung umgestellt werden. Ausgangsstoffe für dieses Pflanzsubstrat sind zwei Tonarten, die aus Waterland, nördlich von Oldenburg, stammen. Sie sind die bisher einzigen, die sich mit Luft aufschäumen lassen und sie sind außerdem relativ frei von schädlichen chemischen Ballaststoffen. Die beiden Tonarten werden in fladenartigen Schichten abgebaut, dann zerkleinert und im bestimmten Verhältnis miteinander vermischt. Anschließend muß diese Substanz für längere Zeit bei hoher Luftfeuchtigkeit gelagert werden, um eine allseits gleichmäßige Ausdehnung zu erreichen. Nach wiederholtem sorgfältigen Mischvorgang wird dem Material in einer Aufbereitungsanlage Luft zugeführt. Diese macht später ca. 40% des Volumens aus. Nur dadurch ist die enorm hohe Kapillarwirkung und Luftzirkulation bedingt, die bekanntlich für den Wurzelbereich der Pflanzen von entscheidender Wichtigkeit ist. Auch kann es hierdurch kaum zur Einnistung von Schädlingen kommen. Der Ton wird anschließend gebrannt, jedoch in keinem Partikelbereich verbrannt. Dadurch unterscheidet er sich wesentlich von den bisherigen Tonsubstraten. So ist es möglich, daß eine ausgeglichene Feuchtigkeitsverteilung im Material schon nach einer Stunde gegeben ist. Anschließend wird die zusammengebackene Tonmasse gebrochen, gesiebt und abgepackt.

Der Vorteil der Verwendung eines solchen Pflanzsubstrates bei einer nach der Erfindung ausgebildeten Pflanzsäule liegt darin, daß optimale Bedingungen für die Höhenbepflanzung gewährleistet sind. Auch für die Düngung lassen sich ohne Schwierigkeiten an sich bekannte und in der Hydrokultur bewährte Düngemittel einsetzen. Des weiteren ist jederzeit eine Aufstockung, also Erhöhung der Pflanzsäule möglich. Man verwendet dazu Ergänzungsstücke, die nur Pflanzgefäße, Zwischendecks, Wassereinfüllschalen, Verbindungsröhrchen und Rippen, die das Standgefäß und die Zwischendecks vorteilhafterweise verbinden, aufzuweisen brauchen und auf die bestehende Pflanzsäule nach vor-

- 4 -

hergehender Auspflanzung der oberen Öffnung der Pflanzsäule aufgesetzt werden.

Um eine besonders vorteilhafte Verbindung zwischen Standgefäß, Zwischendecks, Rippen, Einfüllschalen und Pflanzgefäß zu garantieren, können die einzelnen Pflanzgefäße
zu einem Ringgefäß vereinigt sein.

Zwei Ausführungsbeispiele einer Einrichtung nach der Erfindung sind in den Zeichnungen wiedergegeben.

Es zeigen

Fig. 1    eine schematische Seitenansicht der Pflanzsäule,
         teilweise im Schnitt, gemäß einer Ausführungsform;
Fig. 2    eine Aufsicht auf die Pflanzsäule nach Fig. 1;
Fig. 3    eine perspektivische Darstellung, teilweise im
         Schnitt, der Pflanzsäule nach einer zweiten Ausführungsform;
Fig. 4    das Grundgefäß der Pflanzsäule nach Fig. 3 im Schnitt;
Fig. 5    ein auf das Grundgefäß nach Fig. 4 aufzusetzendes
         Aufsatzgefäß im Schnitt; und in
Fig. 6    die Pflanzsäule nach Fig. 3 im bepflanzten Zustand.

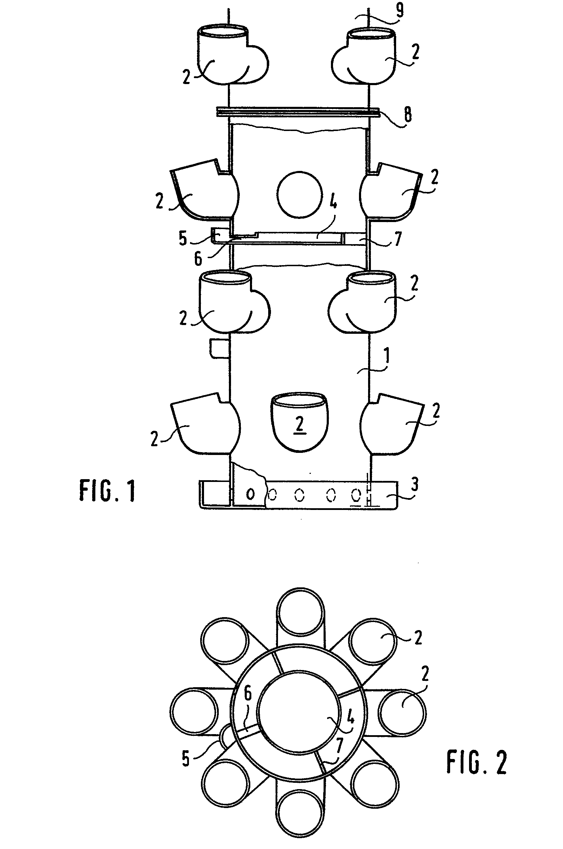

Die Pflanzsäule nach Fig. 1 besteht aus einem hohlen Standgefäß 1, stockwerkartig übereinander angeordneten, seitlich
vorstehenden Pflanzgefäßen 2, einem unteren Wassereinfüllbecken 3, Zwischendecks 4, für die Zwischendecks erforderlichen Wassereinfüllschalen 5 und die Zwischendecks 4 mit
den Wassereinfüllschalen 5 verbindenden Verbindungsröhrchen
6. Zwischen dem Standgefäß 1 und dem jeweiligen Zwischendeck 4 sind Rippen 7 vorgesehen.

Zur Aufstockung der Pflanzsäule 1 dienen Ergänzungsstükke 9, die ähnlich wie das Standgefäß 1 mit Pflanzgefäßen 2
und Zwischendecks 4, Wassereinfüllbecken 3, Verbindungsröhrchen 6 und Rippen 7 ausgerüstet sind, von denen die Zwischendecks, Wassereinfüllbecken, Verbindungsröhrchen und Rippen zur Vereinfachung der Zeichnung nicht mehr im einzelnen dargestellt sind. Die Verbindung zwischen dem Standgefäß 1 und dem Ergänzungsstück 9 stellt eine verschraubte oder geklemmte Flanschverbindung 8 her, die mit einer Rundschnurdichtung oder Flächendichtung abgedichtet werden kann.

Beim Einsatz der Pflanzsäule werden das Standgefäß 1 in seiner vollen Höhe sowie die Pflanzgefäße 2 mit dem bereits gewässerten Langzeitpflanzsubstrat gefüllt. Daran anschließend kann jedes der seitlich vorstehenden Pflanzgefäße 2 und auch die obere Öffnung des Standgefäßes 1 unter Zugabe einer bestimmten Menge eines geeigneten Düngemittels bepflanzt werden.

Bei Aufstockung der Pflanzsäule ist ein Auspflanzen nur in der oberen Öffnung des Standgefäßes 1 erforderlich.

Ausgehend von einer Kapillarität des Langzeitpflanzsubstrates von z.B. 25 cm sind die Zwischendecks 4 in dieser lichten Höhe in der Pflanzsäule eingearbeitet, so daß ein Austrocknen des Substrates und damit der Wurzeln ausgeschlossen ist. Da der Wasserstand sowohl am unteren Einfüllbecken 3 als auch an den einzelnen Wassereinfüllschalen 5 optisch sichtbar ist, ist die Langzeitbewässerung der Pflanzsäule gewährleistet.

Das zeitliche Nachgießen kann volumetrisch, d.h. nach Größe des Pflanzgefäßes durch eine optische Regelung, wie eine Einfüllmarkierung, z.B. -max.-, -opt.-, -min.- bestimmt werden. Vorteilhafter ist es jedoch, eine periodische Überprüfung der einzelnen Wasserstände in den Zwischendecks vorzunehmen, da eine umfassende Kontrolle der einzelnen Pflanzen durch den unterschiedlich starken

- 6 -

Wasserverbrauch und die unterschiedliche Bewurzelung der Pflanzen im allgemeinen nicht möglich ist.

Die stockwerkartig angeordneten Pflanzgefäße 2 können von Stockwerk zu Stockwerk gegeneinander versetzt sein, beispielsweise um 60° oder um 90°, um rankenden Pflanzen genügend Raum zu verschaffen.

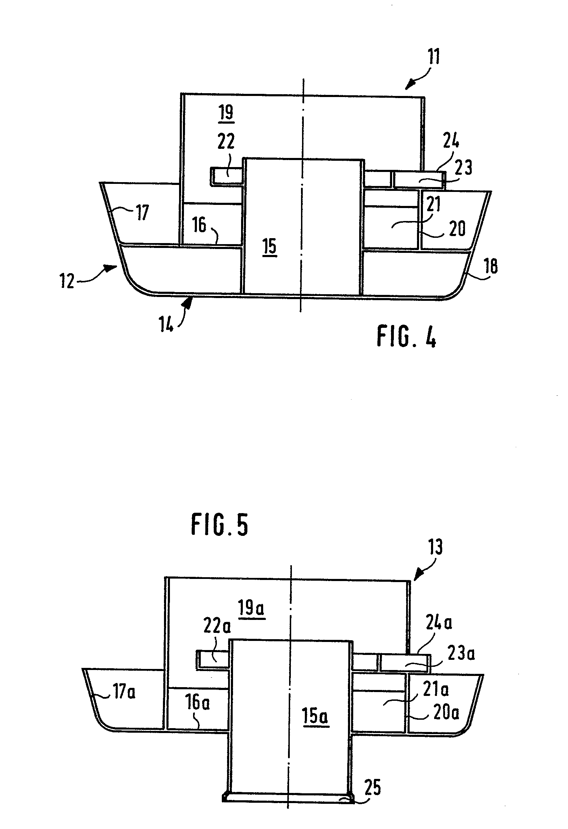

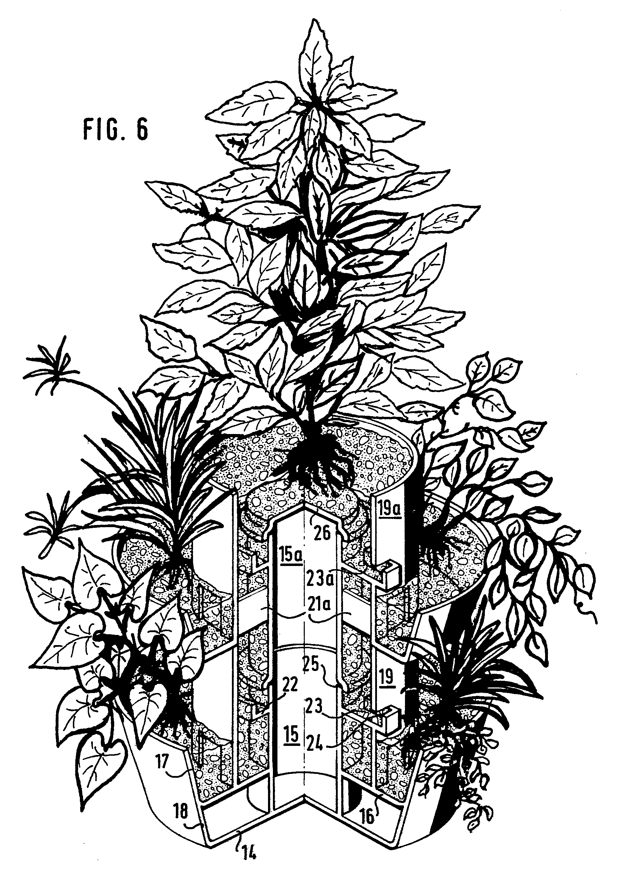

Die Fig. 2 bis 6 zeigen eine zweite Ausführungsform der erfindungsgemäßen Pflanzsäule. Bei dieser Ausführungsform besteht die Pflanzsäule 11 aus einem Grundgefäß 12 und mindestens einem aufstockbaren Aufsatzgefäß 13. Das Grundgefäß 12 unterscheidet sich von den Aufsatzgefäßen 13 nur durch eine Standschale 14, auf deren Boden sich ein Innenzylinder 15 erhebt, an dem eine sich radial nach außen erstreckende Ringplattform 16 befestigt ist, die an ihrem Außenumfang eine hochgeführte Ringwand 17 aufweist, in die am Übergang zum Rand der Ringplattform 16 die Außenringwand 18 der Standschale 14 übergeht. Auf der Ringplattform 16 erhebt sich etwa mittig zwischen dem Innenzylinder 15 und der Ringwand 17 ein Zwischenzylinder 19, der in der Nachbarschaft der Ringplattform 16 mehrere, vorzugsweise gleichmäßig über den Umfang verteilte Öffnungen 20 aufweist und durch über den Umfang verteilte, jeweils zwei dieser Öffnungen 20 voneinander trennende und sich knapp bis über deren obere Begrenzung erhebende Rippen 21 (Fig. 4) mit dem Innenzylinder 15 verbunden ist. In der Ebene der oberen Begrenzung der Ringwand 17 ist am Innenzylinder 15 ein ringförmiges Zwischendeck 22 vorgesehen, an das über ein Verbindungsröhrchen oder eine Verbindungsrinne 23 eine Wassereinfüllschale 24 angeschlossen ist. Der Zwischenzylinder 19 überragt dieses Zwischendeck 22 soweit, daß bei aufgestocktem Aufsatzgefäß 13 zwischen der durch die Ringplattform 16 und die Ringwand 17 gebildeten ringförmigen Pflanzschale und der entsprechenden Pflanzschale im Aufsatzgefäß 13 ein ausreichender Freiraum für die Pflanzen verbleibt, wie Fig. 5 und 6 deutlich zeigen.

-7-

- 7 -

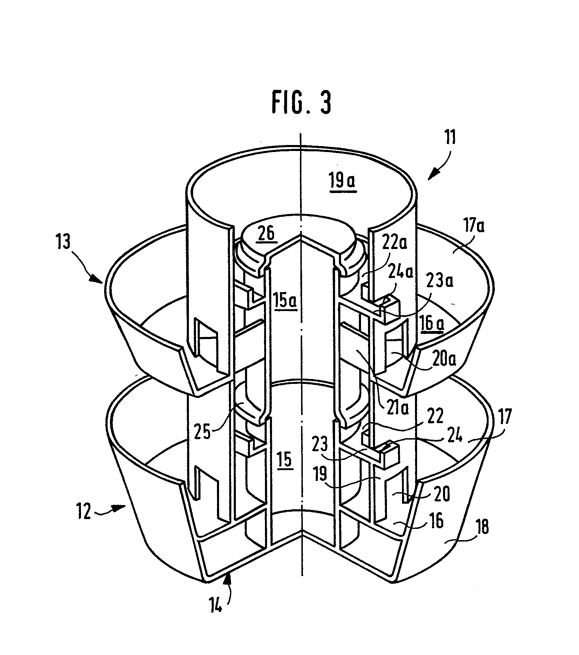

Beim Aufsatzgefäß sind die entsprechenden Teile mit den gleichen Bezugszeichen, jedoch unter Hinzufügung des Buchstabens a bezeichnet. Hier fehlt die Standschale. Stattdessen ist das untere Ende des Innenzylinders 15a mit einer Muffe 25 versehen, so daß sich nach dem Aufsetzen des Aufsatzgefäßes 13 auf das Grundgefäß 12 eine gute Standfestigkeit des Aufsatzgefäßes 13 ergibt, weil die Muffe 25 das obere Ende des Innenzylinders 15 des Grundgefäßes 13 übergreift. Die Aufstockung kann beliebig fortgesetzt werden. Beim letzten Aufsatzgefäß 13 wird die obere freie Öffnung des Innenzylinders 15 durch einen Deckel 26 abgeschlossen (Fig. 3). Im obersten Aufsatzgefäß erfolgt noch eine mittige Bepflanzung oberhalb des Deckels 26, wie Fig. 6 erkennen läßt.

Der Ringraum zwischen dem Innenzylinder und dem Zwischenzylinder sowie die jeweiligen Pflanzschalen sind mit dem Langzeitpflanzsubstrat gefüllt. Die Einfüllung von Wasser und gegebenenfalls darin gelöstem Düngemittel erfolgt über die Wassereinfüllschalen 24 bzw. 24a, wobei zu Beginn des Einpflanzens gegebenenfalls die unterste Pflanzschale zusätzlich gewässert werden kann.

Das Pflanzgefäß kann aus PVC, Ton, Keramik, Acryl oder Glas bestehen. Acryl oder Glas besitzen den Vorteil, daß die gesamte Bewässerung, Bewurzelung sowie das Wachstum genau verfolgt werden können.

- 1 -

P a t e n t a n s p r ü c h e

1. Einrichtung zur Haltung von Pflanzen in Großraumbüros, Restaurants, Banken o. dergl. mit einer ein geschlossenes System bildenden Pflanzsäule, bestehend aus einem hohlen Standgefäß mit stockwerkartig übereinander angeordneten, seitlich angesetzten Pflanzgefäßen und einem unteren Wassereinfüllbecken sowie mit einer Vorrichtung zur Zuführung von Wasser zu den Pflanzgefäßen, g e k e n n z e i c h - n e t dadurch, daß unter Verwendung von Pflanzsubstraten und Hydrodüngern zwischen den stockwerkartig übereinander angeordneten Pflanzgefäßen (2 bzw. 12, 13) Zwischendecks (4 bzw. 22, 22a) angeordnet sind und daß als Vorrichtung zum Zuführen von Wasser jedem Zwischendeck (4 bzw. 22, 22a) eine mit diesem durch Verbindungsröhrchen (6 bzw. 23, 23a) verbundene Wassereinfüllschale (5 bzw. 24, 24a) zugeordnet ist.

2. Einrichtung nach Anspruch 1, dadurch g e k e n n - z e i c h n e t , daß das Standgefäß (1) und die Zwischendecks (4) über Rippen (7) miteinander verbunden sind.

3. Einrichtung nach Anspruch 1, dadurch g e k e n n - z e i c h n e t , daß die Pflanzsäule aus einem Grundgefäß (1 bzw. 12) und mindestens einem aufstockbaren Aufsatzgefäß (9 bzw. 13) besteht.

4. Einrichtung nach Anspruch 3, dadurch g e k e n n - z e i c h n e t , daß das Grundgefäß (12) eine Standschale (14) aufweist, auf deren Boden sich ein Innenzylinder (15) erhebt, an dem eine sich radial nach außen erstreckende Ringplattform (16) befestigt ist, die an ihrem Außenumfang eine hochgeführte Ringwand (17) aufweist, und daß das Zwischendeck (22) am Innenzylinder (15) befestigt ist.

- 2 -

5. Einrichtung nach Anspruch 3 und 4, dadurch g e k e n n - z e i c h n e t , daß die Ringwand (17) am Rand der Ringplattform (16) in eine Außenringwand (18) der Bodenschale (14) übergeht.

6. Einrichtung nach Anspruch 3, 4 und 5, dadurch g e - k e n n z e i c h n e t , daß sich auf der Ringplattform (16) zwischen dem Innenzylinder (15) und der Ringwand (17) ein Zwischenzylinder (19) erhebt.

7. Einrichtung nach Anspruch 6, dadurch g e k e n n - z e i c h n e t , daß der Zwischenzylinder (19) in der Nachbarschaft der Ringplattform (16) mehrere Öffnungen (20) aufweist.

8. Einrichtung nach Anspruch 7, dadurch g e k e n n - z e i c h n e t , daß die Öffnungen (20) gleichmäßig über den Umfang des Zwischenzylinders (19) verteilt sind.

9. Einrichtung nach Anspruch 6 oder 7, dadurch g e k e n n - z e i c h n e t , daß der Zwischenzylinder (19) mit dem Innenzylinder (15) über Rippen (21) verbunden ist.

10. Einrichtung nach Anspruch 4, dadurch g e k e n n - z e i c h n e t, daß das am Innenzylinder (15) befestigte Zwischendeck (22) die Form einer den Innenzylinder (15) umgebenden Ringrippe aufweist.

11. Einrichtung nach Anspruch 10, dadurch g e k e n n - z e i c h n e t, daß die Ringrippe über eine Öffnung (20 ) im Zwischenzylinder (19) in eine Wassereinfüllschale (24) übergeht.

12. Einrichtung nach Anspruch 3 bis 11, dadurch g e - k e n n z e i c h n e t, daß das Aufsatzgefäß (13) am unteren Ende des Innenzylinders (15a) eine Muffe (25) aufweist.

- 3 -

13. Einrichtung nach Anspruch 3 bis 12, dadurch g e - k e n n z e i c h n e t , daß beim letzten Aufsatzgefäß (13) die obere freie Öffnung des Innenzylinders (15a) durch einen Deckel (26) abgeschlossen ist.

1/4

FIG. 1

FIG. 2

0098474

2/4

FIG. 3

11

19a

13

26

22a

24a  23a

15a

16a

20a

17a

21a

25

22  17

23

19  24

15

20

12

16  18

14

FIG. 4

FIG. 5

FIG. 6